# EUROPEAN PATENT SPECIFICATION

(11) **EP 2 809 998 B1**
(45) Date of publication and mention of the grant of the patent: **21.08.2019**
(21) Application number: 13710586.2
(22) Date of filing: 04.02.2013
(51) Int. Cl.: F24H 9/02, F28F 9/00

(54) **HEATING DEVICE**
HEIZVORRICHTUNG
DISPOSITIF DE CHAUFFAGE

(30) Priority: 03.02.2012 NL 2008225
(43) Date of publication of application: 10.12.2014
(73) Proprietor: Intergas Heating Assets B.V., 7742 NA Coevorden (NL)
(72) Inventor: COOL, Peter Jan, NL-7241 GE Lochem (NL)
(74) Representative: Haan, Raimond
(86) International application number: PCT/NL2013/050057
(87) International publication number: WO 2013/115648

(56) References cited:
- EP-A1- 2 208 946
- EP-A1- 2 239 159
- DE-A1-102010 031 250
- JP-A- 2005 221 088
- KR-A- 20080 014 644

## Description

The invention relates to a device for heating a flowing medium such as water, comprising a heating module and a heat exchanger connected thereto which are at least partially enclosed by an insulating material. Such a heating device is generally known, for instance in the form of a central heating boiler. Such a CH boiler is marketed by applicant in different variants under the names Kompakt HRE and Prestige HR.

In a CH boiler water is heated and then transported via conduits to radiators in a space in order to heat this space. The heating module generally comprises a gas burner for the purpose of heating the water. In a so-called combi-boiler tap water is also heated in addition to water for heating. Use is made here of a heat exchanger so that the heat of the gas burner can be transferred via one of the media to the other medium without the liquid flows coming into direct contact with each other.

A "heating device" is understood in the present application to mean any appliance suitable for heating a medium which is used to heat a space or suitable for heating tap water. In addition to central heating boilers - both combi-boilers and solo boilers - this is thus also understood to mean hot water appliances for tap water. Heating devices of the above described type must meet increasingly higher standards in respect of the efficiency to be achieved thereby. This is related to the wish to make buildings, and particularly dwellings, increasingly energy-efficient. In order to specify the energy efficiency of a building use is made of an index, the so-called Energy Performance Coefficient (EPC). A maximum value has been specified for this EPC, which is continuously being lowered. From 2006 a maximum EPC of 0.8 thus applied to house building in the Netherlands, but since 2011 this may amount to only 0.6. The expectation is that from 2015 the EPC norm will even be set at 0.4. The Energy Performance Coefficient of a dwelling is calculated on the basis of the energy consumption associated with use of the building. This is understood to mean the energy necessary to heat or cool the indoor climate, for the hot tap water and lighting. The efficiency of the heating boiler is therefore of great importance for the level of the Energy Performance Coefficient, particularly in the case of a combi-boiler.

The energy consumption over a 24-hour cycle of use is taken into account for the purpose of calculating the EPC. The standstill losses then become a significant factor for a heating boiler.

EP-A1-2 208 946 is directed to an air conditioner indoor unit, comprising a body casing, wherein vacuum heat insulating material comprising a vacuum-packed core is bonded to the inner surfaces which face each heat exchanger.

The invention now has for its object to provide a heating device of the above described type which has high energy efficiency and therefore has a favourable effect on the EPC of a dwelling in which it is applied.

This is achieved according to the invention with a heating device according to claim 1, wherein the insulating material comprises a vacuum-packed core material. Such a vacuum-packed core material has a heat conduction coefficient which is much lower than that of conventional insulating materials and amounts to no more than 0.005 W/mK. A much thinner layer of material can thereby be applied in order to achieve the same insulation. The thickness of the layer of vacuum-packed core material need in practice amount to only about an eighth of the thickness of a layer of conventional insulating material with the same insulating properties. The vacuum-packed core material used as insulating material can hereby be much lighter than conventional insulating materials, whereby it is also easier to process. The vacuum-packed core material moreover comprises no fibres, this in contrast to many conventional insulating materials. This is important with a view to working conditions legislation.

The heating module and the heat exchanger are received in a housing with a number of walls, and the vacuum-packed core material is arranged between at least one of the walls and the heating module and/or the heat exchanger.

A structurally simple embodiment of the heating device according to the invention is obtained by the vacuum-packed core material embodied as a panel, and wherein such a vacuum panel is arranged along at least one of the walls.

The vacuum panel is preferably arranged along a substantially closed wall of the housing. It is not therefore necessary to break through the panel for passage of conduits and the like, whereby it can be manufactured in relatively simple manner as an integral unit.

In order to prevent overheating of the vacuum-packed core material, this material is, according to the invention, arranged at a distance from the heating module and/or the heat exchanger.

This is achieved in structurally simple manner by the heating device being provided with at least one spacer arranged between the heating module and/or the heat exchanger on the one side and the at least one vacuum panel on the other.

When the at least one vacuum panel comprises a reflective foil enclosing the core material, it is recommended that the at least one spacer is substantially permeable to radiation. The thermal radiation coming from the heating module and/or the heat exchanger can then be reflected by the foil without the spacer(s) forming an obstruction here.

This effect can be achieved with simple means when the at least one spacer comprises a plate with a number of openings.

It is on the other hand also possible to envisage the heating module and/or the heat exchanger being fixed with bolts to a wall of the housing and the at least one spacer comprising a bushing or ring arranged round at least one of the bolts. A desired distance between the heating module/heat exchanger and the vacuum panel can thus also be ensured in simple manner.

The invention will now be elucidated on the basis of two embodiments, wherein reference is made to the accompanying drawing, in which:
Figure 1 is a perspective view with exploded parts of a part of a heating device according to a first embodiment of the invention,
Figure 2 shows a cross-section through the vacuum panel along line II-II in figure 1, and
Figure 3 is a view corresponding to figure 1 of an alternative embodiment of the heating device according to the invention.

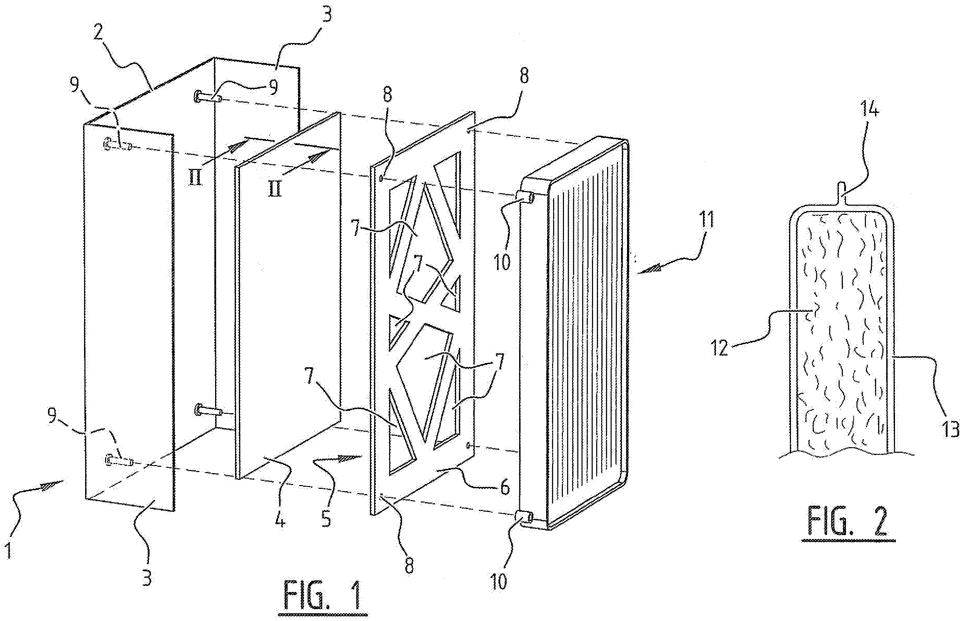

Figure 1 shows a part of a housing 1 of the heating device according to the invention which consists of a rear wall 2 and two side walls 3. Formed together with a front wall, upper wall and lower wall (which are not shown here) is a closed cabinet in which components of the heating device are accommodated. Only heat exchanger 11 is shown here for the sake of clarity, although a heating module, a control unit and all the required conduits are of course also accommodated in the cabinet.

According to the invention an insulating panel 4 is arranged against rear wall 2 in order to increase the energy efficiency of the heating device. This insulating panel 4 comprises a core material 12 enclosed by a foil 13 which is joined together at a seam 14 to form a gas and water vapour-tight packaging. A vacuum is created in the volume of this packaging, whereby the heat conduction of core material 12 is greatly reduced and the insulating action thus greatly increased. Core material 12 can otherwise be formed by a pressed powder consisting substantially of microporous silicic acid. Cloaking means can also be present for the purpose of minimizing the infrared radiation, as well as cellulose fibres for improving the mechanical stability. In the shown embodiment plastic foil 13 is a reflective foil. Because the vacuum-packed core material 12 insulates so well, panel 4 can have a small thickness of a maximum of several tens of millimetres. A panel with a thickness in the order of a centimetre can probably suffice in practice.

In order to prevent damage to the insulating vacuum panel 4 as a result of overheating, in the shown embodiment a spacer 5 is arranged between heat exchanger 11 and panel 4. This spacer 5 takes the form of a plate 6 in which a number of relatively large openings 7 have been formed, so that the spacer forms no obstruction to the heat radiation coming from heat exchanger 11 and reflected by the reflective foil 13 of panel 4. The plate 6 forming the spacer 5 can have a considerably greater thickness than vacuum panel 4; the thickness of plate 6 can be three to eight times that of panel 4. In the shown embodiment spacer 5 is about five times as thick as panel 4.

Heat exchanger 11 is fixed to rear wall 2 by means of bolts 9 which are arranged on the rear wall and which protrude through eyes 10 on the edge of heat exchanger 11. Openings 8 through which bolts 9 pass are also formed in spacer 5. In order to prevent openings having to be formed in vacuum panel 4, which would make the construction of the panel considerably more difficult, the dimensions of vacuum panel 4 are chosen such that it fits within the bolts 9. Panel 4 is simply enclosed here between wall 2 and spacer 5 so that no special provisions are required for fixing thereof.

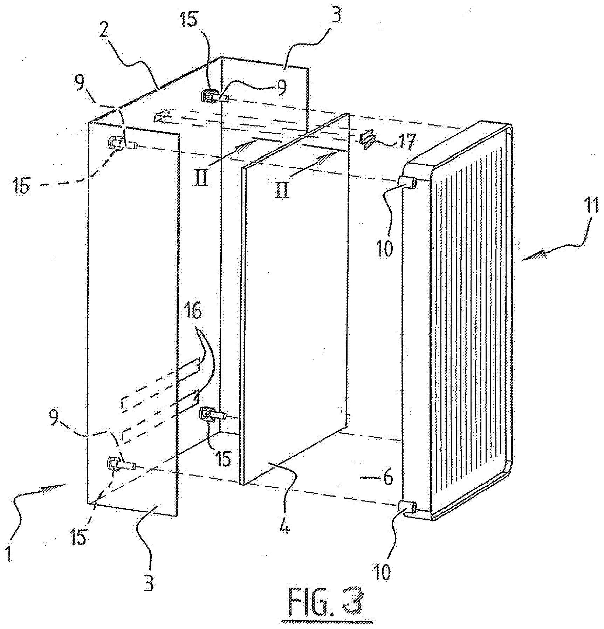

Another type of spacer can also be applied instead of the shown plate-like spacer 5 with large openings 7. In figure 3 the spacers are formed by simple bushings 15 round the bolts 9 with which heat exchanger 11 is fixed to rear wall 2. Special provisions are indeed necessary here to fix vacuum panel 4 to rear wall 2. As can be seen in the figure, this can for instance be realized by applying an adhesive layer 16 between panel 4 and wall 2. It is also possible to envisage use being made of special clamping brackets 17 for fixing purposes. What is important here is that the fixing is such that foil 13 is not pierced, since the insulating power of vacuum panel 4 would then be greatly reduced.

The application of an insulating material on the basis of a vacuum-packed core material thus makes it possible to reduce the losses of a heating device, particularly when it is not operational. The Energy Performance Coefficient of a building in which the heating device is applied can hereby be reduced. In addition, comfort is hereby increased since the heating device more readily remains at temperature during standstill and can thereby bring the water more quickly to a desired temperature after being switched on.

Although the invention has been elucidated above on the basis of one embodiment, it is not limited thereto. The vacuum-packed insulating material could thus also be applied at other locations in the heating device. It is possible here to envisage the side walls, the upper and lower wall and parts of the front wall of the housing. The only practical limitation is that it is difficult to form passages through the vacuum-packed insulating material, so that it will not be possible to insulate parts of the housing.

The scope of the invention is defined solely by the following claims.

## Claims

1. Device, comprising:
- a heat exchanger (11) which is at least partially enclosed by an insulating material (4);
- wherein the insulating material comprises a vacuum-packed core material (12);
- wherein the heat exchanger (11) is received in a housing (1) with a number of walls (2, 3), wherein the vacuum-packed core material (12) is arranged between at least one of the walls (2, 3) and the heat exchanger (11);
- wherein the vacuum-packed core material (12) is embodied as a panel (4), and such a vacuum panel (4) is arranged along at least one of the walls;
**characterized in that**
- the device is a heating device configured to heat a flowing medium such as water, further comprising a heating module which is at least partially enclosed by an insulating material (4);
- wherein the heating device is configured to heat the flowing medium used to heat a space or suitable for heating tap water using heat from the heating module;
- wherein the vacuum-packed core material (12) is arranged at a distance from both the heating module and the heat exchanger (11);
- wherein the heating module is received in the housing (1) with the number of walls (2, 3), wherein the vacuum-packed core material (12) is arranged between at least one of the walls (2, 3) and the heating module;
- wherein at least one spacer (5, 6, 9, 15) arranged between the heating module and the heat exchanger (11) on the one side and the at least one vacuum panel (4) on the other side to maintain the distance;
- wherein the heating module and/or the heat exchanger (11) is fixed with bolts (9) to the wall (2) of the housing (1); and
- wherein the vacuum panel (4) fits within the bolts (9), enclosing vacuum panel (4) between wall (2) and spacer (5, 6, 9, 15).

2. Heating device as claimed in claim 1, **characterized in that** the vacuum panel (4) is arranged along a substantially closed wall of the housing.

3. Heating device as claimed in claim 1 or 2, **characterized in that** the at least one vacuum panel (4) comprises a reflective foil (13) enclosing the core material, and the at least one spacer (5, 6, 9, 15) is substantially permeable to radiation.

4. Heating device as claimed in claim 3, **characterized in that** the at least one spacer (5, 6, 9, 15) comprises a plate (6) with a number of openings (7).

## Patentansprüche

1. Vorrichtung, die aufweist:
- einen Wärmetauscher (11), der wenigstens teilweise von einem Isoliermaterial (4) umschlossen ist;
- wobei das Isoliermaterial ein vakuumverpacktes Kernmaterial (12) aufweist;
- wobei der Wärmetauscher (11) in einem Gehäuse (1) mit einer Anzahl von Wänden (2, 3) aufgenommen ist, wobei das vakuumverpackte Kernmaterial (12) zwischen wenigstens einer der Wände (2, 3) und dem Wärmetauscher (11) angeordnet ist;
- wobei das vakuumverpackte Kernmaterial (12) als eine Vakuumplatte (4) ausgeführt ist und eine derartige Vakuumplatte (4) entlang wenigstens einer der Wände angeordnet ist; **dadurch gekennzeichnet, dass**
- die Vorrichtung eine Heizvorrichtung ist, die konfiguriert ist, um ein Strömungsmedium, wie etwa Wasser, zu heizen, die ferner ein Heizmodul aufweist, das wenigstens teilweise von einem Isoliermaterial (4) umschlossen ist;
- wobei die Heizvorrichtung konfiguriert ist, um das Strömungsmedium zu heizen, das verwendet wird, um einen Raum zu heizen, oder zum Heizen von Leitungswasser unter Verwendung von Wärme von dem Heizmodul geeignet ist;
- wobei das vakuumverpackte Kernmaterial (12) in einem Abstand sowohl von dem Heizmodul als auch dem Wärmetauscher (11) angeordnet ist;
- wobei das Heizmodul in dem Gehäuse (1) mit der Anzahl von Wänden (2, 3) aufgenommen ist, wobei das vakuumverpackte Material (12) zwischen wenigstens einer der Wände (2, 3) und dem Heizmodul angeordnet ist;
- wobei wenigstens ein Abstandshalter (5, 6, 9, 15) zwischen dem Heizmodul und dem Wärmetauscher (11) auf der einen Seite und der wenigstens einen Vakuumplatte (4) auf der anderen Seite angeordnet ist, um den Abstand zu halten;
- wobei das Heizmodul und/oder der Wärmetauscher (11) mit Bolzen (9) an der Wand (2) des Gehäuses (1) fixiert ist/sind; und
- wobei die Vakuumplatte (4) in die Bolzen (9) passt, welche die Vakuumplatte (4) zwischen Wand (2) und Abstandshalter (5, 6, 9, 15) umschließen.

2. Heizvorrichtung nach Anspruch 1, **dadurch gekennzeichnet, dass** die Vakuumplatte (4) entlang einer im Wesentlichen geschlossenen Wand des Gehäuses angeordnet ist.

3. Heizvorrichtung nach Anspruch 1 oder 2, **dadurch gekennzeichnet, dass** die wenigstens eine Vakuumplatte (4) eine reflektierende Folie (13) aufweist, die das Kernmaterial umschließt, und der wenigstens eine Abstandshalter (5, 6, 9, 15) im Wesentlichen strahlungsdurchlässig ist.

4. Heizvorrichtung nach Anspruch 3, **dadurch gekennzeichnet, dass** der wenigstens eine Abstandshalter (5, 6, 9, 15) eine Platte (6) mit einer Anzahl von Öffnungen (7) aufweist.

## Revendications

1. Dispositif, comprenant :
- un échangeur de chaleur (11) qui est au moins partiellement enfermé par un matériau isolant (4) ;
- dans lequel le matériau isolant comprend un matériau central emballé sous vide (12) ; dans lequel l'échangeur de chaleur (11) est reçu dans un logement (1) avec un certain nombre de parois (2, 3), dans lequel le matériau central emballé sous vide (12) est agencé entre au moins l'une des parois (2, 3) et l'échangeur de chaleur (11) ;
- dans lequel le matériau central emballé sous vide (12) est réalisé comme un panneau (4), et ce panneau à vide (4) est agencé le long d'au moins l'une des parois ;
**caractérisé en ce que**
- le dispositif est un dispositif de chauffage configuré pour chauffer un milieu en écoulement comme l'eau, comprenant en outre un module de chauffage qui est au moins partiellement enfermé par un matériau isolant (4) ;
- dans lequel le dispositif de chauffage est configuré pour chauffer le milieu en écoulement utilisé pour chauffer un espace ou approprié pour chauffer l'eau du robinet en utilisant la chaleur provenant du module de chauffage ;
- dans lequel le matériau central emballé sous vide (12) est agencé à une certaine distance du module de chauffage et de l'échangeur de chaleur (11) à la fois ;
- dans lequel le module de chauffage est reçu dans le logement (1) avec le certain nombre de parois (2, 3), dans lequel le matériau central emballé sous vide (12) est agencé entre au moins l'une des parois (2, 3) et le module de chauffage ;
- dans lequel au moins une entretoise (5, 6, 9, 15) est agencée entre le module de chauffage et l'échangeur de chaleur (11) d'un côté et l'au moins un panneau à vide (4) de l'autre côté pour maintenir la distance ;
- dans lequel le module de chauffage et/ou l'échangeur de chaleur (11) est/sont fixé(s) avec des boulons (9) à la paroi (2) du logement (1) ; et
- dans lequel le panneau à vide (4) s'ajuste dans les boulons (9), enfermant le panneau à vide (4) entre la paroi (2) et l'entretoise (5, 6, 9, 15).

2. Dispositif de chauffage selon la revendication 1, **caractérisé en ce que** le panneau à vide (4) est agencé le long d'une paroi sensiblement fermée du logement.

3. Dispositif de chauffage selon la revendication 1 ou 2, **caractérisé en ce que** l'au moins un panneau à vide (4) comprend une feuille réfléchissante (13) enfermant le matériau central, et l'au moins une entretoise (5, 6, 9, 15) est sensiblement perméable au rayonnement.

4. Dispositif de chauffage selon la revendication 3, **caractérisé en ce que** l'au moins une entretoise (5, 6, 9, 15) comprend une plaque (6) avec un certain nombre d'ouvertures (7).
